# EUROPÄISCHE PATENTANMELDUNG

(11) **EP 1 002 857 A2**
(43) Veröffentlichungstag der Anmeldung: **24.05.2000**
(21) Anmeldenummer: 99122821.4
(22) Anmeldetag: 17.11.1999
(51) Int. Cl.: C12G 1/032

(54) **Körnchenabschneider für Gärtankanlagen**

(30) Priorität: 19.11.1998 DE 29820705 U
(71) Anmelder: Schultis, Erich, 77978 Schweighausen (DE)
(72) Erfinder: Schultis, Erich, 77978 Schweighausen (DE)
(74) Vertreter: Neymeyer, Franz, Dipl.-Ing. (FH)

(57) **Zusammenfassung**

Es sind Vorrichtungen zur Weinherstellung bekannt, die einen Gärsaftkreislauf aufweisen. Von einem Gärtank wird über eine Saftvorlaufleitung (5) Gärsaft in einen Überlaufbehälter geleitet, wobei zum Ausfiltern von Fruchtkörnchen in der Saftvorlaufleitung (5) eine Filtereinrichtung (3) mit einem Filterelement (40) vorgesehen ist. Um zu erreichen, daß der Flüssigkeitsstrom durch die Filtereinrichtung (3) auch bei einem nach längerer Betriebsdauer zugesetztem Filterelement (40) nicht oder nur geringfügig durch die ausgefilterten Fruchtkörnchen behindert wird ist vorgesehen, daß das Filterelement (3) und das Filtergehäuse (19) des Filtereinrichtung (3) in ihrer Form und Anordnung derart aufeinander abgestimmt sind, daß der Flüssigkeitsstrom bei zugesetztem Filterelement (3) am Filterelement (3) vorbei strömt.

## Beschreibung

Die Erfindung betrifft eine Vorrichtung zur Weinherstellung, insbesondere bestehend aus einem Gärtank, einem Überlaufbehälter, einer Saftvorlaufleitung, durch welche Gärsaft über eine Filtereinrichtung zum Ausfiltern von Fruchtkörnchen während des Gärprozesses vom Gärtank in den Überlaufbehälter geleitet wird, einer Saftrücklaufleitung vom Überlaufbehälter zum Gärtank, einer Entlüftungsleitung für den Überlaufbehälter sowie einer den Gärtank und den Überlaufbehälter verbindenden Belüftungsleitung.

Es ist eine Vorrichtung der gattungsgemäßen Art bekannt (EP 0 737 740 B1), welche zur Weinbereitung einen Gärtank aufweist, der mit Gärsaft oder Gärmaische befüllbar ist. Oberhalb dieses Gärtanks ist ein im Volumen kleinerer Überlaufbehälter vorgesehen, welcher über mehrere Leitungen mit dem Gärtank verbunden ist. So führt eine Saftvorlaufleitung vom Boden des Gärtanks über ein Absperrventil unterseitig in den Überlaufbehälter. Von diesem Überlaufbehälter führt eine Saftrücklaufleitung über ein weiteres Absperrventil oberseitig in den Gärtank. Im oberen Endbereich des Überlaufbehälters ist ein Schwimmerventil vorgesehen, über das eine Belüftungsleitung und eine Entlüftungsleitung mit dem Überlaufbehälter verbunden ist. Die Belüftungsleitung führt über ein T-Stück zurück zum Gärtank und mündet in dessen obere Stirnwand. In der Belüftungsleitung ist ebenfalls ein Absperrventil vorgesehen. Die Entlüftungsleitung, welche mit der Belüftungsleitung in Verbindung steht, ist ebenfalls mit einem Absperrventil versehen und mündet ins Freie. Diese Entlüftungsleitung dient bei Funktionsstörungen gleichzeitig als Überlaufleitung. In der Stirnwand ist desweiteren ein Einfüllstutzen für den Gärsaft oder die Gärmaische vorgesehen, welcher mittels eines Deckels dicht verschließbar ist.

Nach dem Einfüllen des Gärsaftes oder der Gärmaische durch den Einfüllstutzen und dem Verschließen des Gärtanks werden die Absperrventile der Rücklaufleitung und der Belüftungsleitung geschlossen. Die Absperrventile der Vorlaufleitung und der Entlüftungsleitung sowie das Schwimmerventil sind hingegen geöffnet. Während des Gärprozesses wird im Gärtank ein Druck erzeugt, durch welchen der Gärsaft über die Vorlaufleitung und deren offenes Absperrventil nach oben in den Überlaufbehälter gedrückt wird. Um zu verhindern, daß im Gärsaft stets vorhandene Fruchtkörnchen bzw. Traubenkörnchen in den Überlaufbehälter gepreßt werden, ist im Mündungsbereich der Vorlaufleitung innenseitig im Gärtank ein Filterelement in Form eines Gittersiebes vorgesehen.

Im weiteren Verlauf des Gärprozesses füllt sich der Überlaufbehälter bis das Schwimmerventil am oberen Ende des Überlaufbehälters geschlossen wird. Im Gärtank und im Überlaufbehälter baut sich jetzt ein höherer Druck bis maximal 4 bar auf, der mit einem Überdruckventil, das ebenfalls in der Stirnwand des Gärtanks angeordnet ist, überwacht wird. Nach Erreichen dieses Druckzustandes werden die Absperrventile der Vorlaufleitung und der Entlüftungsleitung geschlossen. Anschließend werden das Absperrventil der Saftrücklaufleitung sowie das Absperrventil der Belüftungsleitung geöffnet. Der sich im Überlaufbehälter befindliche Gärsaft strömt nun über die Rücklaufleitung zurück in den Gärtank, wobei über die Belüftungsleitung und das offene Absperrorgan der Belüftungsleitung aus dem Gärtank über das sich öffnende Schwimmerventil Gase zum Druckausgleich in den Überlaufbehälter gelangen. Somit läuft in dieser Stellung der Absperrventile der Überlaufbehälter vollständig leer. Anschließend wird die Grundeinstellung der Absperrorgane wieder hergestellt, d.h., daß die Absperrorgane der Rücklaufleitung und der Belüftungsleitung wieder geschlossen werden, während die Absperrorgane der Vorlaufleitung und der Entlüftungsleitung wieder geöffnet werden. In diesem Zustand kann sich nunmehr erneut Gärdruck im Gärtank aufbauen, so daß wiederum Gärsaft durch die Vorlaufleitung nach oben in den Überlaufbehälter gedrückt wird.

Bis zum Abschluß des Gärprozesses wird dieser Saftumlauf ständig wiederholt, so daß sich das Filtersieb im Mündungsbereich der Vorlaufleitung mit der Zeit zusetzt und somit der Gärsaft unter erhöhtem Druck durch die im Filtersieb zurückgehaltenen Fruchtkörnchen hindurchgepreßt werden muß. Dadurch wird der Durchfluß durch die Vorlaufleitung erheblich behindert. Desweiteren bewirkt der erhöhte Durchpreßdruck, daß der Gärsaft einen erhöhten Anteil an Bitterstoffen aufnimmt, was zu einem bitteren Geschmack und zu erhöhter Gerbsäure des fertigen Weines führt. Das Filtersieb ist bei der bekannten Vorrichtung zur Weinherstellung auch nur äußerst schwer zugänglich und kann im Bedarfsfall nur schlecht gereinigt werden.

Demgemäß liegt der Erfindung die Aufgabe zugrunde, eine Filtereinrichtung zum Ausfiltern von Fruchtkörnchen für eine Vorrichtung zur Weinbereitung zu schaffen, bei der auch bei einem nach längerer Betriebsdauer zugesetztem Filterelement der Flüssigkeitsstrom nicht oder nur geringfügig durch die ausgefilterten Fruchtkörnchen behindert wird.

Die Aufgabe wird erfindungsgemäß zusammen mit den Merkmalen des Oberbegriffs des Anspruches 1 dadurch gelöst, daß die Filtereinrichtung im Bereich der Saftvorlaufleitung angeordnet ist und ein Filtergehäuse mit einem Filterelement aufweist, das aus dem durchlaufenden Flüssigkeitsstrom Fruchtkörnchen ausfiltert,
und daß das Filterelement und das Filtergehäuse in ihrer Form und Anordnung derart aufeinander abgestimmt sind, daß der Flüssigkeitsstrom bei zugesetztem Filterelement am Filterelement vorbei strömt.

Durch die Anordnung des Filterelementes mit seinem Filtergehäuse im Bereich der Saftvorlaufleitung ist eine verbesserte Zugänglichkeit des Filterelementes gewährleistet. Gleichzeitig ist auch sichergestellt, daß aus dem durch das Filtergehäuse hindurchgeleiteten Flüssigkeitsstrom von Gärsaft die darin enthaltenen Fruchtkörnchen sicher ausgefiltert werden. Das Filtergehäuse und das darin angeordnete Filterelement sind dabei so ausgebildet, daß der Flüssigkeitsstrom bei sich zusetzendem Filterelement am Filterelement vorbei strömen kann.

Gemäß Anspruch 2 kann dies dadurch erreicht werden, daß das Filterelement einen im wesentlichen vertikal verlaufenden Wandabschnitt aufweist, durch welchen das Filtergehäuse in einen Einlaufbereich und in einen Überlaufbereich unterteilt wird. Der vertikale Wandabschnitt endet dabei mit seiner oberen Endkante in vertikalem Abstand unterhalb der oberen Stirnwand des Filtergehäuses. D.h., daß zwischen der oberen Endkante des vertikalen Wandabschnittes und der oberen Stirnwand des Filtergehäuses ein Überlaufspalt besteht. Setzt sich nun das Filterelement langsam zu, so steigt der Flüssigkeitspegel im Filtergehäuse an. Ist nun das Filterelement vollständig oder annähernd vollständig zugesetzt, so kann der Flüssigkeitsstrom durch den Überlaufspalt über die obere Endkante des Filterelementes hinwegströmen, wodurch erreicht wird, daß der Flüssigkeitsstrom während des Gärprozesses nicht behindert wird. Desweiteren wird erreicht, daß ebenfalls kein erhöhter Druckaufbau erfolgt und auch der Flüssigkeitsstrom des Gärsaftes nicht weiter durch die vom Filterelement zurückgehaltenen Fruchtkörnchen gepreßt wird. Damit erfolgt aber auch keine erhöhte Aufnahme von Bitterstoffen durch den Gärsaft.

Um ein Durchströmen des Filterelementes sicherzustellen, weist das Filtergehäuse gemäß Anspruch 3 einen Flüssigkeitszulauf auf, der in den Einlaufbereich des Filtergehäuses mündet.

Gemäß Anspruch 4 kann das Filterelement auch etwa topfförmig ausgebildet sein und mit seinem umlaufenden, im wesentlichen vertikal ausgerichteten Wandabschnitt einen zentralen Einlaufbereich bilden. Der Überlaufbereich ist zwischen dem vertikalen Wandabschnitt und dem Filtergehäuse außerhalb des Einlaufbereiches etwa ringförmig ausgebildet. Desweiteren ist gemäß Anspruch 4 das komplette Filterelement aus dem Filtergehäuse herausnehmbar. Bei der Ausgestaltung des Filterelementes gemäß Anspruch 4 bildet folglich der umlaufende, im wesentlichen vertikal ausgerichtete Wandabschnitt eine vergrößerte Filterfläche, durch welche der Gärsaft radial von innen nach außen hindurch strömt und die Fruchtkörnchen in diesem Wandabschnitt zurückgehalten werden.

Um die Filterfläche weiter zu erhöhen, kann gemäß Anspruch 5 das topfförmige Filterelement in vertikalem Abstand zum Gehäuseboden des Filtergehäuses angeordnet sein, so daß auch die Bodenfläche des Filterelementes als Filter nutzbar ist.

Gemäß Anspruch 6 ist bei einer topfförmigen Ausgestaltung des Filterelementes der Flüssigkeitszulauf oberhalb des Filterelementes angeordnet, wobei der Flüssigkeitsstrom zentral in den Einlaufbereich vertikal nach unten gerichtet zugeführt wird. Dadurch wird sichergestellt, daß nicht vor dem Zusetzen des Filterelementes bereits Gärmaische über das Filterelement bzw. dessen Oberkante überläuft. Die Funktionsweise dieses Filterelementes gemäß der Ansprüche 4 bis 6 weist somit ein äußerst hohes Aufnahmevolumen für Fruchtkörnchen auf. Erst wenn das Filterelement annähernd vollständig mit Fruchtkörnchen gefüllt ist, läuft dieses über, so daß ungefilterter Gärsaft zusammen mit Fruchtkörnchen zur Saftvorlaufleitung bzw. in den Überlaufbehälter gelangen können. Ein Durchsatz durch die im Filterelement gesammelten Fruchtkörnchen unter erhöhtem Druck erfolgt auch bei dieser Ausführungsform nicht, so daß auch keine erhöhten Anteile an Bitterstoffen in den Gärsaft gelangen können.

Zur Zuführung des Gärsaftes kann der Flüssigkeitszulauf gemäß Anspruch 7 durch eine etwa radial in das Filtergehäuse mündende, etwa horizontal ausgerichtete Zulaufleitung erfolgen. Um sicherzustellen, daß der Gärsaft zentral in den Einlaufbereich des Filterelementes gelangt, ist desweiteren gemäß Anspruch 7 ein etwa rechtwinklig abgewinkeltes Umlenkrohr vorgesehen, welches von der Innenseite des Filtergehäuses her herausnehmbar in die Zulaufleitung eingesteckt ist. Dieses Umlenkrohr endet mit seiner Auslaßöffnung etwa im Zentrum im Bereich der Oberkante des umlaufenden Wandabschnittes des Filterelementes, so daß der Flüssigkeitsstrom sicher zentral und vertikal nach unten gerichtet in den Einlaufbereich des Filterelementes einströmt. Es versteht sich, daß der Flüssigkeitszulauf auch in der oberen Stirnwand des Filtergehäuses angeordnet sein kann. In diesem Fall könnte das Umlenkrohr selbstverständlich entfallen.

Gemäß Anspruch 8 ist der Gehäuseboden des Filtergehäuses etwa kegelförmig ausgebildet und unterseitig mit einer, ein Absperrorgan aufweisenden Entleerungsleitung versehen. Durch diese kegelförmige Ausbildung wird unterhalb des Filterelementes ein Aufnahmeraum geschaffen, in welchem sich mit dem Gärsaft überlaufende Fruchtkörnchen absetzen können. Da die Strömungsgeschwindigkeit in einer solchen Vorrichtung zur Weinherstellung aufgrund des sich langsam steigernden Druckes nur sehr gering ist, ist ein solches Absetzen der Fruchtkörnchen im kegelförmigen Bodenbereich sicher möglich, wodurch auch beim Überlaufen des Filterelementes ein zusätzlicher Filtereffekt bewirkt wird.

Um zu verhindern, daß aus dem Filtergehäuse nach dem Überlaufen des Filterelementes doch eine größere Zahl von Fruchtkörnchen in die Vorlaufleitung gelangen, ist gemäß Anspruch 9 der Flüssigkeitsablauf etwa im Bereich des vertikalen Wandabschnittes des Filterelementes angeordnet. Dabei kann diese Anordnung auch relativ hoch etwa in der oberen Hälfte des Wandabschnittes vorgesehen sein, so daß sich auch bei Überlauf des Filterelementes noch eine möglichst große Menge von Fruchtkörnchen im unterhalb des Flüssigkeitsablaufes befindlichen Raum des Filtergehäuses absetzen kann. Der Flüssigkeitsablauf ist dabei vorzugsweise etwa radial, horizontal zum Führungsgehäuse ausgerichtet am Führungsgehäuse angeordnet.

Die Ausgestaltungen gemäß der weiteren Ansprüche 10 bis 12 dienen im wesentlichen der Möglichkeit, das Filterelement aus dem Filtergehäuse in einfacher Weise herausnehmen und entleeren oder reinigen zu können.

So ist gemäß Anspruch 10 im Flüssigkeitszulauf und im Flüssigkeitsablauf außerhalb des Filtergehäuses jeweils ein Absperrorgan vorgesehen. Durch diese beiden Absperrorgane kann die Verbindung einerseits zum Gärtank und andererseits zum Überlaufbehälter unterbrochen werden, so daß beim Öffnen des Filtergehäuses durch Abnehmen des gemäß Anspruch 11 vorgesehenen abnehmbaren Gehäusedeckels kein Gärsaft insbesondere aus der Saftvorlaufleitung in das Filtergehäuse zurücklaufen kann. Dadurch wird ein Überlaufen beim Öffnen des Filtergehäuses verhindert. Auch ist das Filtergehäuse durch die vorgesehenen Absperrorgane in der Saftvorlaufleitung in einem Bereich unterhalb des Flüssigkeitsspiegels im Gärtank anordenbar, ohne daß beim Öffnen des Filtergehäuses bei geschlossenen Absperrorganen Gärsaft aus dem Filtergehäuse überläuft.

Wird das Filtergehäuse allerdings oberhalb des Flüssigkeitsspiegels des Gärsaftes im Gärtank angeordnet, kann auch auf diese Absperrorgane verzichtet werden. Dann ist allerdings zum Entleeren der Filtereinrichtung darauf zu achten, daß das Filtergehäuse nur geöffnet wird, wenn sich im Überlaufbehälter kein Gärsaft mehr befindet, dieser also vollständig entleert ist.

Um den während des Gärprozesses auftretenden Überdruck abbauen zu können, für den Fall, daß eine Filterreinigung in einer Phase des Gärprozesses vorgenommen werden soll, in welcher der Überlaufbehälter gefüllt ist, ist gemäß Anspruch 12 im Gehäusedeckel des Filtergehäuses ein Entlüftungsventil vorgesehen.

Somit kann aufgrund der Merkmale der Ansprüche 10 bis 12 das Filterelement sicher aus dem Filtergehäuse nach Abnehmen des Gehäusedeckels zum Entleeren oder Reinigen herausgenommen werden, ohne daß eine unkontrollierte Druckentweichung oder ein Überlaufen des Filtergehäuses selbst erfolgt.

Durch die erfindungsgemäße Ausgestaltung der Filtereinrichtung mit seinem Filtergehäuses und dem Filterelement wird eine Filtereinrichtung für eine Vorrichtung zur Weinbereitung gemäß den Merkmalen des Oberbegriffes des Anspruches 1 zur Verfügung gestellt, bei welcher die Fruchtkörnchen des Gärsaftes während des Gärprozesses sicher aus dem umlaufenden Gärsaft heraus gefiltert werden. Auch bei sich langsam zusetzendem Filterelement besteht nicht die Gefahr, daß der Gärsaft unter erhöhtem Druck durch den Filter bzw. die bereits ausgefilterten Fruchtkörnchen hindurch gepreßt werden muß. Damit ist sichergestellt, daß der Gärsaft nicht in erhöhtem Maße Bitterstoffe aus den Fruchtkörnchen aufnehmen kann.

Es wird ausdrücklich darauf hingewiesen, daß das Filterelement für alle Vorrichtungen zur Weinherstellung geeignet ist, bei welchen ein Saftumlauf vorgesehen ist. Die Erfindung ist nicht auf die Anwendung einer Vorrichtung zur Weinherstellung beschränkt, die nach dem Überdruckprinzip arbeitet sondern kann auch für Vorrichtungen eingesetzt werden, bei welcher beispielsweise eine Umwälzpumpe für den Saftumlauf sorgt.

Anhand der Zeichnung wird im folgenden die Erfindung näher erläutert. Es zeigt:
- Fig. 1: eine Gesamtansicht einer Vorrichtung zur Weinherstellung mit einer erfindungsgemäßen Filtereinrichtung;
- Fig. 2: die erfindungsgemäße Filtereinrichtung gemäß Fig. 1 im vertikalen Teilschnitt;
- Fig. 3: ein zweites Ausführungsbeispiel einer erfindungsgemäßen Filtereinrichtung im Schnitt;
- Fig. 4: eine Ansicht IV aus Fig. 3 bei abgenommenen Deckel des Filtergehäuses.

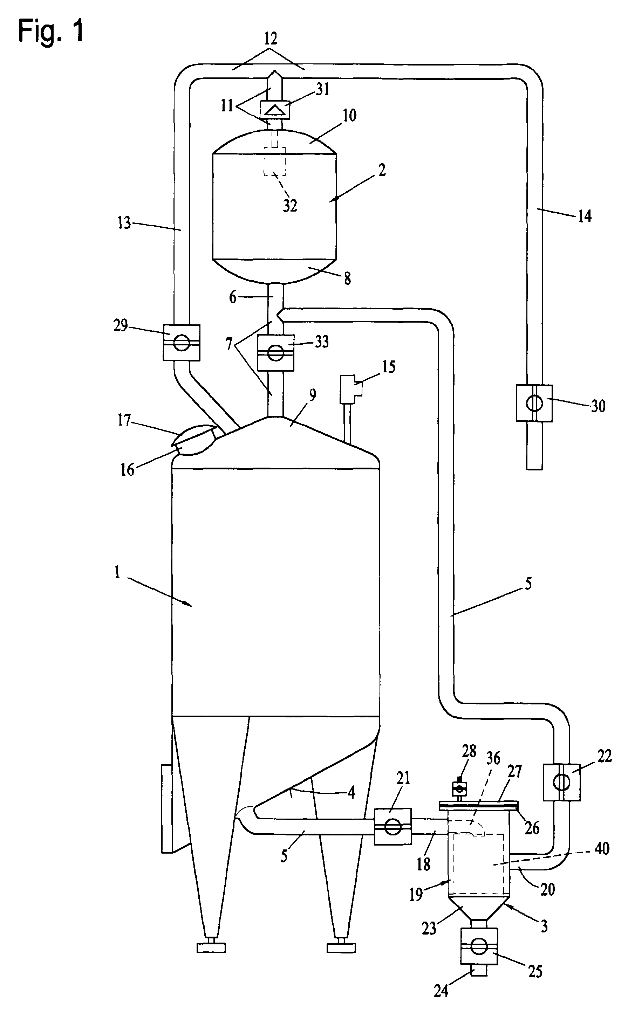

Fig. 1 zeigt den prinzipiellen Aufbau einer Vorrichtung zur Weinherstellung, welche im wesentlichen aus einem Gärtank 1, einem Überlaufbehälter 2 und einer Filtereinrichtung 3 besteht. Vom unteren, schräg verlaufenden Tankboden 4 des Gärtanks 1 führt eine Saftvorlaufleitung 5 über den oberen Endbereich 6 einer Saftrücklaufleitung 7 unterseitig in den Überlaufbehälter 2. Die Saftrücklaufleitung 7 führt vom unteren Behälterboden 8 des Überlaufbehälters 2 direkt in die obere Stirnwand 9 des Gärtanks 1. Der Überlaufbehälter 2 ist somit bei diesem Ausführungsbeispiel vertikal über dem Gärtank 1 angeordnet.

In der oberen Deckwand 10 des Überlaufbehälters 2 ist ein Entlüftungsstutzen 11 vorgesehen. Der Entlüftungsstutzen 11 mündet in eine Rohrleitung 12, die einerseits als Belüftungsleitung 13 zum oberen Ende des Gärtanks 1 führt. Andererseits bildet die Rohrleitung 12 ausgehend vom Entlüftungsstutzen 11 eine Entlüftungsleitung 14, durch welche eine Verbindung mit der Umgebungsluft herstellbar ist. Auf der oberen Stirnwand 9 des Gärtanks 1 ist ein Überdruckventil 15 vorgesehen, über welches ein maximal erreichbarer Druck im Gärtank 1 einstellbar ist. Zum Befüllen des Gärtanks 1 mit Gärsaft oder Gärmaische zur Weinherstellung weist dessen obere Stirnwand 9 einen Einfüllstutzen 16 auf, welcher mit einem dicht verschließbaren Verschlußdeckel 17 versehen ist.

Wie aus Fig. 1 weiter ersichtlich ist, bildet die Saftvorlaufleitung 5 einen Flüssigkeitszulauf 18, welcher in ein Filtergehäuse 19 der Filtereinrichtung 3 im wesentlichen radial und horizontal verlaufend mündet. Desweiteren bildet die Saftvorlaufleitung 5 einen Flüssigkeitsablauf 20, welcher ebenfalls am Filtergehäuse 19 in der Filtereinrichtung 3 radial verlaufend und etwa horizontal ausgerichtet angeordnet ist. Im Bereich des Flüssigkeitszulaufs 18 weist die Saftvorlaufleitung 5 ein Absperrorgan in Form eines beispielsweise manuell betätigbaren Absperrventil 21 auf. Im Bereich des Flüssigkeitsablaufes 20 ist in der Saftvorlaufleitung 5 ebenfalls ein Absperrventil 22 vorgesehen.

Das Filtergehäuse 19 ist mit einem etwa kegelförmig nach unten zulaufenden Gehäuseboden 23 versehen, an dessen unterem Ende eine Entleerungsleitung 24 vorgesehen ist, welche ihrerseits mittels eines Absperrventils 25 verschließbar ist. Am oberen Ende des Filtergehäuses 19 ist dieses ein Ringflansch 26 vorgesehen, mit welchem ein Gehäusedeckel 27 abnehmbar verschraubt ist. Der Gehäusedeckel 27 ist mit einem Entlüftungsventil 28 versehen, welches in das Filtergehäuse 19 mündet und ebenfalls manuell betätigbar sein kann.

Die Belüftungsleitung 13 weist im Bereich der Stirnwand 9 des Gärtanks 1 ein weiteres Absperrorgan in Form eines manuell betätigbaren Absperrventiles 29 auf, während die Entlüftungsleitung 14 im Bereich ihres äußeren Endes mit einem Absperrventil 30 versehen ist, welches ebenfalls manuell betätigbar sein kann.

Im Entlüftungsstutzen 11 zwischen der oberen Deckwand 10 des Überlaufbehälter 2 und der im wesentlichen quer zum Entlüftungsstutzen verlaufenden Rohrleitung 12 ist ein Schwimmerventil 31 vorgesehen, das mit seinem Schwimmkörper 32 (gestrichelt dargestellt) in den Hohlraum des Überlaufbehälters 2 hineinragt. Auch die Saftrücklaufleitung 7 ist mit einem Absperrventil 33 versehen, welches unterhalb der in die Saftrücklaufleitung 7 mündenden Saftvorlaufleitung 5 angeordnet ist. Sämtliche Absperrventile können, wie oben beschrieben, manuell betätigbar sein. Es sind jedoch auch andere Betätigungssarten vorstellbar.

Zu Beginn des Betriebes der Vorrichtung zur Weinherstellung wird der Gärtank 1 über seinen Einfüllstutzen 16 mit Gärsaft oder Gärmaische gefüllt. Anschließend wird der Einfüllstutzen 16 durch den Verschlußdeckel 17 dicht verschlossen. Beim nachfolgenden Gärprozeß wird im Gärtank 1 ein Überdruck erzeugt, durch welchen der Gärsaft durch die Saftvorlaufleitung 5 über das offene Absperrventil 21, den Flüssigkeitszulauf 18, die Filtereinrichtung 3, das Absperrventil 22 und die sich daran weiter anschließende Saftvorlaufleitung 5 über den oberen Bereich 6 der Saftrücklaufleitung 7 in den Überlaufbehälter 2 gedrückt wird. Damit sich im Gärtank 1 ein entsprechender Förderdruck aufbauen kann, sind das Absperrventil 33 und das Absperrventil 29 geschlossen. Das Schwimmerventil 31 des Entlüftungsstutzens 11 sowie das Absperrventil 30 der Entlüftungsleitung 14 sind geöffnet, so daß die im Überlaufbehälter 2 befindlichen Gase entweichen können.

Mit zunehmendem Gärdruck füllt sich über die Vorlaufleitung, die Absperrventile 21, 22 sowie die Filtereinrichtung 3 der Überlaufbehälter 2, bis das Schwimmerventil 31 durch Anheben seines Schwimmkörpers 32 dicht geschlossen wird. Anschließend steigt der Gärdruck bis etwa 4 bar an, wobei dieser maximal gewünschte Druck über das Überdruckventil 15 voreinstellbar ist. Nach Erreichen dieses Systemdruckes werden das Absperrventil 22 der Vorlaufleitung 5 und das Absperrventil 30 der Entlüftungsleitung 14 geschlossen, während die Absperrventile 33 und 29 der Saftrücklaufleitung 7 sowie der Belüftungsleitung 13 geöffnet werden. Damit kann nun der im Überlaufbehälter 2 befindliche Gärsaft über die Rücklaufleitung 7 und deren Absperrventil 33 zurück in den Gärtank 1 gelangen. Zum Volumenausgleich strömt dabei Gas über die Belüftungsleitung 13 und deren Absperrventil 29 über den Entlüftungsstutzen 11 und das sich durch diese Rückströmung wieder öffnende Schwimmerventil 31 zurück in den Überlaufbehälter 2. Nachdem der im Überlaufbehälter 2 befindliche Gärsaft vollständig in den Gärtank 1 zurückgeflossen ist, werden die Absperrventile 22, 30 sowie 29 und 33 wieder in ihre ursprüngliche Stellung gebracht. In dieser Stellung kann sich erneut Gärdruck im Gärtank 1 aufbauen, wodurch wiederum Gärsaft über die Vorlaufleitung 5 in den Überlaufbehälter 2 gedrückt wird, bis dort bei entsprechendem Füllstand wiederum das Schwimmerventil 31 geschlossen wird. Anschließend wird der Gärsaft durch entsprechende Änderung der Ventilstellungen wieder zurück in den Gärtank 1 abgelassen. Bis zum Abschluß des Gärprozesses wird dieser Saftumlauf mehrfach wiederholt.

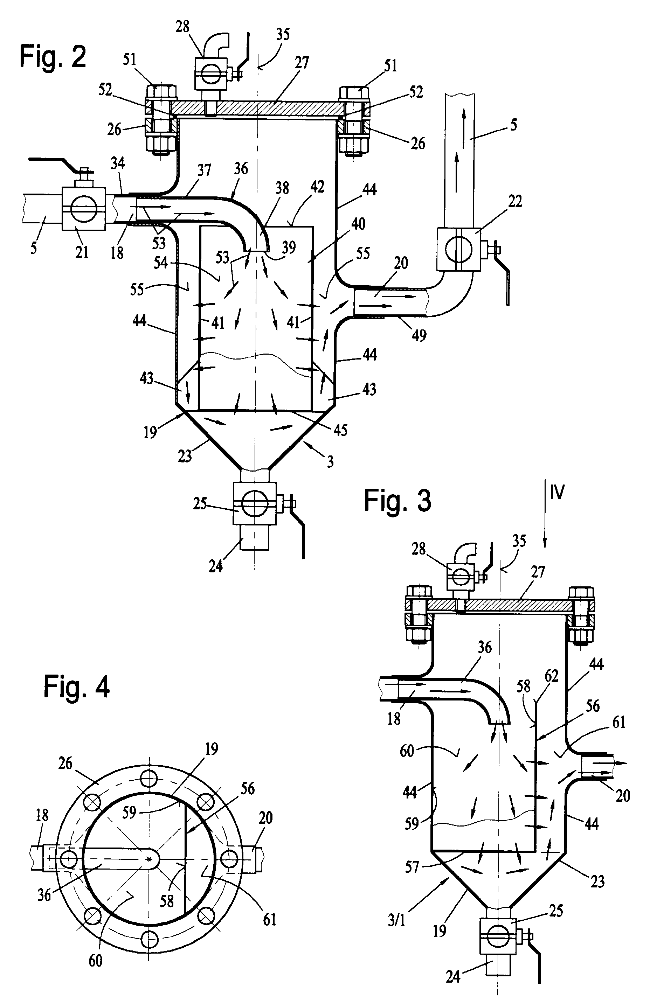

Beim Durchlauf des Gärsaftes durch die Filtereinrichtung 3 werden aus dem Gärsaft die darin befindlichen Fruchtkörnchen ausgefiltert. Zu diesem Zweck weist die Filtereinrichtung 3, wie insbesondere aus Fig. 2 ersichtlich ist, einen besonderen Aufbau auf.

Fig. 2 zeigt auf der linken Seite das Absperrventil 21 der Vorlaufleitung 5, welches etwa im Bereich des Flüssigkeitszulaufes 18 der Vorlaufleitung 5 in unmittelbarer Nähe des Filtergehäuses 19 der Filtereinrichtung 3 angeordnet ist. Der Flüssigkeitszulauf 18, welcher durch eine entsprechende Zulaufleitung 34 gebildet wird, ist etwa im oberen Drittel des Filtergehäuses 19 senkrecht zu dessen vertikaler Längsmittelachse 35 und radial zum Filtergehäuse 19 verlaufend angeordnet. In die Zulaufleitung 34 ist ein Umlenkrohr 36 innenseitig herausnehmbar eingesteckt. Das Umlenkrohr 36 weist einen Horizontalabschnitt 37 auf und einen Rohrbogen 38, welcher gegenüber dem Horizontalabschnitt 37 vertikal nach unten gerichtet abgebogen ist. Die Länge des Umlenkrohres 36 mit seinem Horizontalabschnitt 37 und seinem Rohrbogen 38 sowie dessen Einstecktiefe in die Zulaufleitung 34 ist derart bemessen, daß der Rohrbogen 38 mit seiner Auslaßöffnung 39 im wesentlichen koaxial zur Längsmittelachse 35 des Filtergehäuses 19 angeordnet ist. Unterhalb des Horizontalabschnittes 37 des Umlenkrohres 36 ist ein Filterelement 40 angeordnet, welches im wesentlichen topfförmig ausgebildet ist. Dementsprechend weist das Filterelement 40 einen umlaufenden, im wesentlichen vertikal ausgerichteten Wandabschnitt 41 auf, welcher mit seiner oberen umlaufenden Endkante 42 unterhalb des Horizontalabschnittes 37 des Umlenkrohres 36 endet. Es versteht sich, daß im montierten Zustand das Umlenkrohr 36 mit seinem Horizontalabschnitt 37 auch auf der Oberkante 42 des Wandabschnittes 41 des Filterelementes 40 aufliegen kann. An seiner äußeren Mantelfläche ist der Wandabschnitt 41 mit mehreren gleichmäßig am Umfang verteilten, vertikal ausgerichteten Stützelementen 43 versehen, mittels welcher das Filterelement 40 zentriert in die umlaufende Vertikalwand 44 des Filtergehäuses 19 eingepaßt ist. Das Filterelement 40 weist desweiteren eine Bodenplatte 45 auf, welche umlaufend mit dem Wandabschnitt 41 verbunden ist.

Der Gehäuseboden 23 des Filtergehäuses 19 ist, wie bereits oben zu Fig. 1 ausgeführt, kegelförmig ausgebildet und verjüngt sich vertikal nach unten hin. An seinem unteren Ende ist der Gehäuseboden 23 mit der Entleerungsleitung 24 versehen, welche das Absperrventil 25 aufweist. Die Stützelemente 43 sind in ihrer Form der kegelförmigen Formgebung des Gehäusebodens 23 derart angepaßt, daß die Bodenplatte 45 des Filterelementes 40 einen vertikalen Abstand zu diesem Gehäuseboden 23 aufweist. Bei dem vorliegenden Ausführungsbeispiel besteht sowohl der Wandabschnitt 41 als auch die Bodenplatte 45 aus einem flüssigkeitsdurchlässig Filtermaterial, welches beispielsweise ein Filtersieb sein kann.

Das Filtergehäuse 19 bzw. dessen Vertikalwand 44 ist beim vorliegenden Ausführungsbeispiel im wesentlichen zylindrisch ausgebildet und weist dementsprechend der Zulaufleitung diametral gegenüberliegend den Flüssigkeitsablauf 20 auf, welcher durch eine entsprechende Ablaufleitung 49 gebildet wird. Im Bereich der Ablaufleitung 49 ist das Absperrventil 22 angeordnet.

Es versteht sich, daß sowohl der Flüssigkeitszulauf 18 als auch der Flüssigkeitsablauf 20 auch anderweitig am Filtergehäuse 19 oder dessen Gehäusedeckel 27 angeordnet sein können. Dies ist im wesentlichen von den konkreten Einbaubedingungen für das Filterelementes 3 abhängig. Insbesondere muß der Flüssigkeitsablauf 20 dem Flüssigkeitszulauf 18 nicht zwingend diametral gegenüberliegen sondern kann auch unter einem anderen beliebigen Winkel zu diesem am Filtergehäuse 19 angeordnet sein.

Oberhalb des Flüssigkeitszulaufes 18 ist der Ringflansch 26 angeordnet, welcher etwa bündig mit der oberen Endkante 50 der Vertikalwand 44 des Ventilgehäuses 19 abschließt. Auf diesem Ringflansch 26 ist der Gehäusedeckel 27 mittels mehrerer Schraubverbindungen 51 abnehmbar befestigt. Zwischen dem Gehäusedeckel 27 und dem Ringflansch 26 ist eine umlaufende Dichtung 52 vorgesehen. Da die Gesamtanordnung während des Gärprozesses unter erhöhtem Druck steht, ist im Gehäusedeckel 27 das Entlüftungsventil 28 vorgesehen, welches in den Innenraum des Filtergehäuses 19 mündet.

Wie aus Fig. 2 weiter ersichtlich ist, ist die Ablaufleitung 49 des Flüssigkeitsablaufes 20 etwa in der vertikalen Mitte der Vertikalwand 41 des Filterelementes 40 angeordnet. Diese Anordnung in dieser vertikalen Höhe ist nicht zwingend. Die vertikale Höhenanordnung der Ablaufleitung 49 sollte allerdings so gewählt werden, daß der Flüssigkeitsstand im Betrieb möglichst nicht über die Oberkante 42 des Filterelementes 40 ansteigt, um sicherzustellen, daß auch die durch das Filterelement 40 auszufilternden Fruchtkörnchen nicht durch überlaufende Flüssigkeit mitgenommen werden und in den Flüssigkeitsablauf 20 gelangen können.

Im Betrieb wird der Filtereinrichtung 3 über die Vorlaufleitung 5, das Absperrventil 21 und die Zulaufleitung 34 sowie das Umlenkrohr 36 Gärsaft zugeführt. Der Strömungsverlauf ist dabei durch die Pfeile 53 beispielhaft angedeutet. Durch die zentrale Anordnung der Auslaßöffnung 39 und deren vertikalen nach unten gerichteten Ausrichtung strömt nun der Gärsaft zentral in den vom Filterelement 40 gebildeten Einlaufbereich 54. Beim Durchtritt des Gärsaftes durch den vertikalen Wandabschnitt 41 wie auch durch die Bodenplatte 45 des Filterelementes 40 werden die im Gärsaft enthaltenen Fruchtkörnchen durch das Filterelement 40 zurückgehalten und setzen sich im Einlaufbereich 54 des Filterelementes 40 auf der Bodenplatte 45 ab. Mit zunehmender Betriebsdauer steigt nun die Höhe der ausgefilterten Fruchtkörnchen im Einlaufbereich 54 des Filterelementes 40 an. Somit verringert sich in den Bereichen, in welchen sich bereits Fruchtkörnchen abgelagert haben, die Durchlässigkeit des Filterelementes 40, während sie oberhalb dieses Bereiches noch für den Gärsaft optimal ist. Der Füllstand der Fruchtkörnchen im Filterelement 40 steigt nun so lange, bis die zuströmende Menge an Gärmaische größer ist, als die Durchlässigkeit des noch freibleibenden Wandabschnittes 41 des Filterelementes 40. Bei weiterem Saftumlauf steigt der gesamte Flüssigkeitsstand über die obere Endkante 42 des Filterelementes 40 an, so daß es zum Überlauf von Gärsaft zusammen mit darin enthaltenen Fruchtkörnchen in den Überlaufbereich 55 der Filtereinrichtung 3 kommt. Die Filtereinrichtung 3 mit der besonderen Ausgestaltung ihres Gehäuses 19 sowie der speziellen Anordnung und Ausbildung des Filterelementes 40 bewirkt aber auch weiterhin noch eine gewisse Ausfilterung von Fruchtkörnchen. Diese können sich nämlich aufgrund der äußerst geringen Strömungsgeschwindigkeit beim Gärprozeß im Bereich des kegelförmig ausgebildeten Gehäusebodens 23 im Filtergehäuse 19 weiter ansammeln.

Nach einem beispielsweise experimentell vorbestimmbaren Zeitabschnitt kann nun das Filterelement 40 entleert oder gereinigt werden. Dazu sind zunächst die beiden Absperrventile 21 und 22 zu schließen. Soll die Filtereinrichtung 3 bei annähernd gefülltem oder vollem Überlaufbehälter 2 entleert werden, steht diese unter einem erhöhten Systemdruck. Dieser erhöhte Systemdruck kann durch das Entlüftungsventil 28 im Gehäusedeckel 27 abgelassen werden, so daß nach Lösen der Schraubverbindungen 51 der Gehäusedeckel 27 gefahrlos abnehmbar ist. Für die weitere Demontage wird nun das Umlenkrohr 36 mit seinem Horizontalabschnitt 37 aus der Zulaufleitung 34 herausgezogen und aus dem Filtergehäuse 19 entfernt. In diesem Zustand ist das mit Fruchtkörnchen gefüllte Filterelement 40 frei zugänglich und kann nach oben aus dem Filtergehäuse 19 zum Zwecke herausgenommen und entleert bzw. gereinigt werden.

Sollten sich nun im kegeligen Gehäuseboden 23 weitere Fruchtkörnchen angesammelt haben, so können diese durch Öffnen des Absperrventiles 25 nach unten durch die Entleerungsleitung 24 abgelassen werden. In diesem geöffneten Zustand des Absperrventils 25 ist auch ein vollständiges Ausspülen des gesamten Filtergehäuses 19 durchführbar, so daß die Filtereinrichtung 3 auch in eingebautem Zustand vollständig entleert und gereinigt werden kann.

Es ist, wie aus Fig. 2 ersichtlich ist, sinnvoll, das ablaufseitige Absperrventil 22 sowie den Ablauf, wie bereits oben erwähnt, unterhalb der Oberkante 42 des Filterelementes 40 anzuordnen, so daß bei geschlossenen Absperrventilen 21 und 22 nur eine geringe Menge an Gärmaische bei geöffnetem Gehäusedeckel 27 nachlaufen und das Filtergehäuse 19 mit Sicherheit nicht überlaufen kann.

In den Fig. 3 und 4 ist ein weiteres Ausführungsbeispiel 3/1 einer Filtereinrichtung dargestellt, deren Gehäuse 19 mit seinem Gehäuseboden 23, der Entleerungsleitung 24 mit dem Absperrventil 25 sowie dem Flüssigkeitszulauf 18 und dem Flüssigkeitsablauf 20 identisch ausgebildet ist wie beim Ausführungsbeispiel gemäß der Fig. 2. Die Filtereinrichtung 3/1 weist ein Filterelement 56 mit einem kreisabschnittförmigen Filterboden 57 auf, mit welchem das Filterelement 56 vertikal bis zum Beginn des kegelförmig zulaufenden Gehäusebodens 23 passend in das Filtergehäuse 19 eingeschoben ist. Desweiteren ist das Filterelement 56 mit einem vertikal nach oben ausgerichteten Wandabschnitt 58 versehen, welcher im montierten Zustand im Filtergehäuse 19 passend an der Innenwand 59 der umlaufenden Vertikalwand 44 des Filtergehäuses 19 anliegt. Somit bildet der vertikale Wandabschnitt 58 eine Filtertrennwand zwischen einem Einlaufbereich 60 und einem Überlaufbereich 61 im Filtergehäuse 19.

Auch bei diesem Ausführungsbeispiel wird über das Umlenkrohr 36 Gärsaft zentral vertikal nach unten gerichtet in den Einlaufbereich 60 des Filtergehäuses 19 eingebracht. Beim Durchströmen des Filterbodens 57 sowie des Wandabschnittes 58 des Filterelementes 56 werden ebenfalls Fruchtkörnchen ausgefiltert und lagern sich auf dem Filterboden 57 des Filterelementes 56 ab. Mit zunehmender Betriebsdauer steigt die Füllstandshöhe an Fruchtkörnchen im Einlaufbereich 60 des Filtergehäuses 19 bis letztendlich Gärsaft zusammen mit den darin enthaltenen Fruchtkörnchen über die Oberkante 66 des Wandabschnittes 57 überläuft. Somit gelangt der Gärsaft zusammen mit den darin enthaltenen Fruchtkörnchen ungefiltert in den Überlaufbereich 61 und strömt vertikal nach unten in Richtung des Gehäusebodens 23. Die im übergelaufenen Gärsaft befindlichen Fruchtkörnchen können sich im Bereich des kegelig ausgebildeten Gehäusebodens 23 ablagern, so daß zumindest nur ein geringer Anteil solcher Fruchtkörnchen in den Flüssigkeitsablauf 20 des Filtergehäuses 19 gelangen kann.

Die Reinigung der Filtereinrichtung 3/1 erfolgt entsprechend der Reinigung der Filtereinrichtung 3, wie bereits oben zu Fig. 2 beschrieben.

Durch die erfindungsgemäßen Ausgestaltungen der Filtereinrichtung wird eine Filtereinrichtung zur Verfügung gestellt, mit welcher mit hohem Wirkungsgrad Fruchtkörnchen aus dem Gärsaft oder der Gärmaische beim Durchströmen durch die Filtereinrichtung ausgefiltert werden können. Desweiteren wird die Durchflußströmung auch bei vollständig zugesetztem bzw. gefülltem Filterelement nicht behindert, da genügend Freiraum zum Überlaufen bzw. Umströmen um das Filterelement vorhanden ist. Das Entleeren und die Reinigung des Filterelementes sind stets in einfacher Weise durchführbar. Insbesondere vorteilhaft ist aber bei dieser Art von Filtereinrichtung, daß auch bei verstopftem Filterelement kein Gärsaft durch die vom Filterelement zurückgehaltenen Fruchtkörnchen hindurchgepreßt wird. Dies bewirkt, daß die Fruchtkörnchen keine Bitterstoffe an den weiterhin durchströmende Gärsaft abgeben können, so daß eine erhebliche Geschmacksverbesserung des fertigen Weines erreichbar ist.

## Patentansprüche

1. Vorrichtung zur Weinherstellung, insbesondere bestehend aus einem Gärtank (1), einem Überlaufbehälter (2), einer Saftvorlaufleitung (5), durch welche Gärsaft über eine Filtereinrichtung (3, 3/1) zum Ausfiltern von Fruchtkörnchen während des Gärprozesses vom Gärtank (1) in den Überlaufbehälter (2) geleitet wird, einer Saftrücklaufleitung (7) vom Überlaufbehälter (2) zum Gärtank (1), einer Entlüftungsleitung (14) für den Überlaufbehälter (2) sowie einer den Gärtank (1) und den Überlaufbehälter (2) verbindenden Belüftungsleitung (13),
**dadurch gekennzeichnet**,
daß die Filtereinrichtung (3, 3/1) im Bereich der Saftvorlaufleitung (5) angeordnet ist und ein Filtergehäuse (19) mit einem Filterelement (40, 56) aufweist, das aus dem durchlaufenden Flüssigkeitsstrom Fruchtkörnchen ausfiltert, und
daß das Filterelement (3, 3/1) und das Filtergehäuse (19) in ihrer Form und Anordnung derart aufeinander abgestimmt sind, daß der Flüssigkeitsstrom bei zugesetztem Filterelement (3, 3/1) am Filterelement (3, 3/1) vorbei strömt.

2. Vorrichtung nach Anspruch 1, dadurch gekennzeichnet, daß das Filterelement (3, 3/1) einen im wesentlichen vertikal verlaufenden Wandabschnitt (41, 58) aufweist, durch welchen das Filtergehäuse (19) in einen Einlaufbereich (54, 60) und in einen Überlaufbereich (55, 61) unterteilt wird und dessen obere Endkante (42, 62) in vertikalem Abstand zur oberen Stirnwand (27) des Filtergehäuses (19) angeordnet ist.

3. Vorrichtung nach einem der Ansprüche 2 bis 5, dadurch gekennzeichnet, daß das Filtergehäuse (19) einen Flüssigkeitszulauf (18) aufweist, der in den Einlaufbereich (54, 60) des Filtergehäuses (19) mündet.

4. Vorrichtung nach Anspruch 2 oder 3, dadurch gekennzeichnet, daß das Filterelement (40) etwa topfförmig ausgebildet ist und mit seinem umlaufenden, im wesentlichen vertikal ausgerichteten Wandabschnitt (41) einen zentralen Einlaufbereich (54) und einen, zwischen dem vertikalen Wandabschnitt (41) und dem Filtergehäuse (19) liegenden, etwa ringförmigen Überlaufbereich (55) bildet, und
daß das Filterelement (3) herausnehmbar im Filtergehäuse (19) eingesetzt ist.

5. Vorrichtung nach Anspruch 4, dadurch gekennzeichnet, daß das Filterelement (3) in vertikalem Abstand zum Gehäuseboden (23) des Filtergehäuses (19) angeordnet ist.

6. Vorrichtung nach Anspruch 4 oder 5, dadurch gekennzeichnet, daß der Flüssigkeitszulauf (18) oberhalb des Filterelementes (40) angeordnet ist, und daß der Flüssigkeitsstrom zentral in den durch das Filterelement (40) gebildeten, zentralen Einlaufbereich (54) vertikal nach unten gerichtet einströmt.

7. Vorrichtung nach Anspruch 6, dadurch gekennzeichnet, daß der Flüssigkeitszulauf durch eine etwa radial in das Filtergehäuse (19) mündende, etwa horizontal ausgerichtete Zulaufleitung (34) gebildet wird, und daß in die Zulaufleitung (34) ein etwa rechtwinklig abgebogenes Umlenkrohr (36) von der Innenseite des Filtergehäuses (19) herausnehmbar eingesteckt ist, durch welches der Flüssigkeitsstrom zentral, vertikal nach unten gerichtet in das Filterelement (40) einströmt.

8. Vorrichtung nach einem der Ansprüche 1 bis 7, dadurch gekennzeichnet, daß der Gehäuseboden (23) des Filtergehäuses (19) etwa kegelförmig ausgebildet ist und unterseitig mit einer, ein Absperrorgan (25) aufweisenden Entleerungsleitung (24) versehen ist.

9. Vorrichtung nach einem der Ansprüche 1 bis 8, dadurch gekennzeichnet, daß das Filtergehäuse (19) einen etwa radial, horizontal zum Filtergehäuses (19) ausgerichteten Flüssigkeitsablauf (20) aufweist, der etwa im Bereich des vertikalen Wandabschnittes (40, 58) des Filterelementes (3, 3/1) angeordnet ist.

10. Vorrichtung nach einem der Ansprüche 3 bis 9, dadurch gekennzeichnet, daß im Flüssigkeitszulauf (18) und im Flüssigkeitsablauf (20) außerhalb des Filtergehäuses (19) jeweils ein Absperrorgan (21, 22) vorgesehen ist.

11. Vorrichtung nach einem der Ansprüche 1 bis 10, dadurch gekennzeichnet, daß die obere Begrenzungswand des Filtergehäuses (19) zum Herausnehmen und Reinigen des Filterelementes (3, 3/1) als abnehmbarer Gehäusedeckel (27) ausgebildet ist.

12. Vorrichtung nach Anspruch 11, dadurch gekennzeichnet, daß der Gehäusedeckel (27) des Filtergehäuses (19) mit einem Entlüftungsventil (28) versehen ist.
